(19) **Europäisches Patentamt** / **European Patent Office** / **Office européen des brevets**

(11) **EP 4 494 845 A1**

(12) **EUROPEAN PATENT APPLICATION**
published in accordance with Art. 153(4) EPC

(43) Date of publication:
22.01.2025 Bulletin 2025/04

(51) International Patent Classification (IPC):
*B29C 55/12* (2006.01)    *B65D 65/40* (2006.01)
*C08J 5/18* (2006.01)    *B32B 15/085* (2006.01)
*B32B 15/088* (2006.01)    *B32B 15/09* (2006.01)

(21) Application number: 23770173.5

(22) Date of filing: 08.02.2023

(52) Cooperative Patent Classification (CPC):
B29C 55/12; B32B 15/085; B32B 15/088;
B32B 15/09; B65D 65/40; C08J 5/18; Y02E 60/10

(86) International application number:
PCT/JP2023/004181

(87) International publication number:
WO 2023/176212 (21.09.2023 Gazette 2023/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.03.2022 JP 2022041878

(71) Applicant: Toyobo Co., Ltd.
Kita-ku
Osaka-shi, Osaka 530-0001 (JP)

(72) Inventors:
• GOTO Takamichi
Inuyama-shi, Aichi 484-8508 (JP)
• TAMARI Noboru
Inuyama-shi, Aichi 484-8508 (JP)
• TORII Ayame
Inuyama-shi, Aichi 484-8508 (JP)

(74) Representative: Vossius & Partner
Patentanwälte Rechtsanwälte mbB
Siebertstrasse 3
81675 München (DE)

(54) **BIAXIALLY ORIENTED POLYAMIDE FILM, AND LAMINATE CONTAINING BIAXIALLY ORIENTED POLYESTER FILM**

(57)    [Problem] Provided is a polyamide film that not only has excellent cold formability regardless of the film's position in the width direction, but also has excellent warpage resistance with less deterioration in dimensional accuracy after forming due to springback.

[Solution] A biaxially oriented polyamide film containing 60% by mass or more of polyamide 6, (a) having a piercing strength of 0.5 N/$\mu$m or more and 1.0 N/$\mu$m or less measured in accordance with JIS Z 7102, (b) having a heat shrinkage rate at 160°C of 3.0% or less in each of the MD direction and the TD direction, and (c) having a stress attenuation rate of 12.0% or more in each of the MD direction and the TD direction in the tensile stress relaxation test at 25°C.

EP 4 494 845 A1

## Description

## TECHNICAL FIELD

The present invention relates to a laminate including a biaxially oriented polyester film and a biaxially oriented polyamide film, and particularly relates to a laminate that can be suitably used for cold forming.

## BACKGROUND ART

In recent years, laminate-type lithium ion battery outer packaging materials, press through packs, and the like have been obtained by cold-forming a laminate formed of a resin film and metal foil. For the laminate to be subjected to the cold-forming, a structure of, for example, a polyethylene terephthalate film/biaxially stretched nylon film/aluminum foil/polypropylene film, is used in general. (See, for example, Patent Document 1.)

Needs for a packaging form having foil of a metal such as aluminum have increased in order to prevent deterioration of contents also in medicine packaging, and formability of the metal foil according to the shape of the content is required to be enhanced.

Factors that affect formability in cold forming include, for example, flexibility of a resin film. In a case where a resin film has low flexibility, high load is applied to the film during elongation in the cold forming, so that pinholes or delamination may occur. Meanwhile, in a case where a resin film has excessively high flexibility, an effect of protecting a laminate including metal foil, as a base material, is reduced, and the obtained laminate has degraded physical properties. Therefore, it is important for the resin film to have flexibility which is not excessively high and not excessively low.

In order to solve the problems, for example, Patent Document 2 discloses a laminate in which at least a base layer, an adhesive layer, a metal layer, and a sealant layer are sequentially stacked, and discloses that, when a sum (A+B) of a value A of stress at 50% elongation/stress at 5% elongation in the MD direction, and a value B of stress at 50% elongation/stress at 5% elongation in the TD direction is in a specific range in the base layer, good formability is obtained.

Meanwhile, in the above-described cold forming, a phenomenon (springback) that, after draw-forming, a part of the formed product is returned from the formed shape to an original non-formed shape, may become a problem. Such springback may cause a problem that dimensional accuracy of the shape after the draw-forming is insufficient. Furthermore, since a portion around a to-be-formed portion is strongly drawn during a forming process, and a base layer around the formed portion may thus be returned to an original shape when the forming process has been performed, warpage occurs and a yield may be reduced in the post-processing.

Even if an F5 value and an F50 value of the film are merely controlled as in Patent Document 2 disclosed above for addressing these problems, although a forming depth is improved, the technique disclosed therein is insufficient for addressing reduction of dimensional accuracy caused by springback after the forming, and improving warp resistance after the forming.

## CITATION LIST

## PATENT DOCUMENT

Patent Document 1: JP 2008-053133 A
Patent Document 2: WO 2015/125806

## SUMMARY OF THE INVENTION

PROBLEMS TO BE SOLVED BY THE INVENTION

The present invention has been made in view of such problems of conventional art. An object of the present invention is to provide a laminate that includes a biaxially oriented polyester film and a biaxially oriented polyamide film, has excellent cold formability, and furthermore, inhibits dimensional accuracy from being reduced due to springback after forming and has excellent warp resistance.

SOLUTION TO THE PROBLEMS

The inventors of the present invention have found, as a result of thorough studies, that, in a case where a specific stretching condition range is selected, and mechanical characteristics of the film are controlled to be in a predetermined range, excellent cold formability can be obtained, and springback and curling after forming can be inhibited, and have achieved the present invention.

The present invention is as follows.

[1] A laminate comprising:

a base layer;
an intermediate layer;
metal foil; and
a sealant layer, wherein
the base layer is a biaxially oriented polyester film satisfying the following (a) to (c), and
the intermediate layer is a biaxially oriented polyamide film satisfying the following (d) to (f),

(a) a piercing strength is 0.45 N/$\mu$m or more and 0.80 N/$\mu$m or less,
(b) a heat shrinkage rate at 150°C is 2.5% or less in each of an MD direction and a TD direction,
(c) a stress attenuation rate indicated by the following formula (1) is 15.0% or more in each of the MD direction and the TD direction in a tensile stress relaxation test at 25°C:

$$\text{stress attenuation rate (\%)} = 100 \times (\sigma0\text{-}\sigma1)/\sigma0 \qquad \text{formula (1)},$$

wherein $\sigma0$ represents a value of a tensile stress obtained immediately after a 50% tensile strain is applied to the film by applying a tensile force at a tensile rate of 200 mm/min, and $\sigma1$ represents a value of a tensile stress obtained when the 50% tensile strain is held for two seconds,
(d) a piercing strength measured in accordance with JIS Z 7102 is 0.5 N/$\mu$m or more and 1.0 N/$\mu$m or less,
(e) a heat shrinkage rate at 160°C is 3.0% or less in each of the MD direction and the TD direction, and
(f) a stress attenuation rate indicated by the above formula (1) is 12.0% or more in each of the MD direction and the TD direction in the tensile stress relaxation test at 25°C.

[2] The laminate according to [1], wherein

the base layer further satisfies the following (g),
(g) the base layer satisfies the following formulas (2) to (5):

$$125\,\text{MPa} \leq Y(MD) \leq 155\,\text{MPa} \qquad \text{formula (2)};$$

$$140\,\text{MPa} \leq Y(TD) \leq 190\,\text{Mpa} \qquad \text{formula (3)};$$

$$1.3 \leq Z(MD) \leq 1.6 \qquad \text{formula (4)};$$

$$1.7 \leq Z(TD) \leq 2.2 \qquad \text{formula (5)},$$

wherein Y(MD) and Y(TD) represent stresses at 30% elongation at 25°C in the MD direction and the TD direction, respectively, of the film, X(MD) and X(TD) represent stresses at 3% elongation at 25°C in the MD direction and the TD direction, respectively, of the film, and Z(MD) and Z(TD) represent values of Y(MD)/X(MD) and Y(MD)/X(MD), respectively.

[3] The laminate according to [1] or [2], wherein

the following (h) is further satisfied,
(h) the laminate satisfies the following formulas (6) to (9):

$$100\,\text{MPa} \leq Y(MD) \leq 150\,\text{MPa} \qquad \text{formula (6)};$$

$$110 \text{ Mpa} \leq Y(TD) \leq 200 \text{ Mpa} \qquad \text{formula (7)};$$

$$1.4 \leq Z(MD) \leq 2.2 \qquad \text{formula (8)};$$

$$2.5 \leq Z(TD) \leq 3.5 \qquad \text{formula (9)},$$

wherein Y(MD) and Y(TD) represent stresses at 30% elongation at 25°C in the MD direction and the TD direction, respectively, of the film, X(MD) and X(TD) represent stresses at 3% elongation at 25°C in the MD direction and the TD direction, respectively, of the film, and Z(MD) and Z(TD) represent values of Y(MD)/X(MD) and Y(MD)/X(MD), respectively, the above formulas (6) to (9) are all satisfied.

[4] The laminate according to any one of [1] to [3], further comprising a printed layer.

[5] A battery outer package material comprising the laminate according to any one of [1] to [4].

ADVANTAGEOUS EFFECTS OF THE INVENTION

By using the laminate of the present invention, metal foil is allowed to appropriately follow the shape of a mold during forming. Therefore, occurrence of pinholes, cracks, and the like can be inhibited and furthermore, springback and warpage after forming can be inhibited. Dimensional accuracy in forming is excellent, and therefore, contribution to enhancement of productivity can also be made.

**BRIEF DESCRIPTION OF THE DRAWINGS**

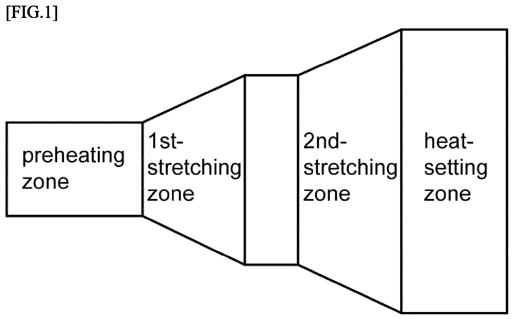

FIG. 1 is a schematic diagram illustrating a method for performing multi-stage stretching in a TD direction in a film producing process.

**DESCRIPTION OF EMBODIMENTS**

The present invention will be described below in detail.

**[Base layer]**

A base layer of the present invention is formed as a biaxially oriented polyester film. The biaxially oriented polyester film is a film formed of a polyester resin composition that includes, as main constituent components, terephthalic acid as a dicarboxylic acid component and ethylene glycol as a diol component. In the description herein, "include, as main constituent components" means that a content of the components in the polyester resin composition is 80 mol% or more with respect to 100 mol% of all the constituent components of the polyester resin, and the content thereof is preferably 90 mol% or more, more preferably 95 mol% or more, and most preferably 97 mol% or more with respect thereto.

In the polyester resin, another component may be copolymerized to the extent that the object of the present invention is not impaired. Specific examples of the copolymerization component include, as dicarboxylic acid components, isophthalic acid, naphthalene dicarboxylic acid, 4,4-diphenyldicarboxylic acid, adipic acid, sebacic acid, and derivatives for forming esters thereof. As the diol component, for example, diethylene glycol, hexamethylene glycol, neopentyl glycol, and cyclohexanedimethanol may be included. Furthermore, polyoxyalkylene glycol such as polyethylene glycol and polypropylene glycol may also be included. A copolymerization amount is preferably 10 mol% or less, more preferably 5 mol% or less, and most preferably 3 mol% or less per constituent repeating unit.

The polyester resin composition may include one kind of polyester resin or a plurality of kinds of polyester resins. The polyester resin composition may include a resin other than polyester resin.

The limiting viscosity of the polyester resin composition preferably ranges from 0.50 to 0.90 dl/g and more preferably ranges from 0.55 to 0.80 dl/g from the viewpoint of film forming property, recoverability, and the like.

The polyester resin composition may contain, in addition to the polyester resin, conventionally known additives such as a lubricant, a stabilizer, a colorant, an antioxidant, an antistatic agent, and an ultraviolet absorber.

For example, the lubricant can adjust a coefficient of kinetic friction of the film. Examples of the lubricant include inorganic lubricants such as silica, calcium carbonate, and alumina, and organic lubricants. As the inorganic lubricant, silica and calcium carbonate are preferable. Among them, porous silica is most preferable from the viewpoint of achieving both transparency and slipperiness.

In the biaxially oriented polyester film of the present invention, the lower limit of the content of the lubricant is preferably 400 ppm by mass and more preferably 600 ppm by mass. When the content of the lubricant is 500 ppm by mass or more, slipperiness of the film can be made good. The upper limit of the content of the lubricant is preferably 1500 ppm by mass and more preferably 1200 ppm by mass. When the content of the lubricant is 1500 ppm by mass or less, transparency of the film can be made good.

A method for obtaining the biaxially oriented polyester film is not particularly limited and can be selected as appropriate, and may be, for example, a T-die method or an inflation method. A typical production process in which a T-die method is used will be described. The T-die method includes (1) melt-extruding a polyester resin composition into a sheet-like shape and cooling the obtained sheet on a cooling roll to form an unstretched sheet, (2) a stretching step of stretching the formed unstretched sheet in an MD direction (longitudinal direction ) and a TD direction (width direction) orthogonal to the MD direction, (3) a heat-setting step of heating and crystallizing the film having been subjected to the stretching step, (4) a thermal relaxation step (may also be referred to as relaxing step) of removing residual strain of the film having been subjected to the heat-setting step, and (5) a cooling step of cooling the film after the thermal relaxation step.

The base layer of the present invention may have a monolayer structure formed of one layer or have a multilayer structure formed of two or more layers. The base layer may have two layers, three layers, four layers, or five layers. The resin compositions forming the respective layers may be the same or different from each other.

The upper limit of the cooling roll temperature is preferably 40°C, and more preferably 20°C or lower. When the cooling roll temperature is 40°C or higher, the degree of crystallinity does not become excessively high when the melted polyester resin composition is cooled and solidified, and the stretching can be more easily performed, and furthermore, transparency can be inhibited from being reduced due to crystallization.

The lower limit of the cooling roll temperature is preferably 0°C. When the cooling roll temperature is 0°C or higher, an effect of inhibiting crystallization can be sufficiently exhibited when the melted polyester resin composition is cooled and solidified. When the cooling roll temperature is within the above-described range, an ambient humidity near the cooling roll is preferably reduced in order to prevent dew formation.

The thickness of the unstretched sheet preferably ranges from 15 to 2500 $\mu$m, and is more preferably 600 $\mu$m or less and most preferably 400 $\mu$m or less.

Next, the stretching process will be described. The stretching method may be either simultaneous biaxial stretching or sequential biaxial stretching. Sequential biaxial stretching will be described below as an example.

The lower limit of the stretching ratio in the MD direction is preferably 2.5 times, more preferably 2.8 times, and particularly preferably 3.1 times. When the stretching ratio in the MD direction is 2.5 times or more, the film has a good mechanical strength, and furthermore, thickness variation properties are good, and these lead to enhancement of winding quality when the film is formed into a roll.

The upper limit of the stretching ratio in the MD direction is preferably 5.0 times, more preferably 4.5 times, and particularly preferably 4.0 times. When the stretching ratio in the MD direction is 5.0 times or less, springback and curling after forming can be inhibited from being increased due to orientation of the film becoming excessively high.

The temperature for the MD direction stretching preferably ranges from 80 to 130°C. If the stretching temperature in the MD direction is lower than 80°C, springback and curling after forming may be increased due to orientation of the film becoming excessively high. Meanwhile, if the stretching temperature in the MD direction is higher than 130°C, the orientation in the MD direction becomes low, and formability may thus be reduced.

As the MD direction stretching method, a method in which stretching is performed between a plurality of rolls, while the rolls are heated, or a method in which stretching is performed by performing heating by an infrared heater or the like, is used. The method in which stretching is performed by performing heating by an infrared heater or the like, is preferable in that a high temperature is easily obtained, localized heating can be easily performed, and scratch and defects caused by rolls can be reduced. Meanwhile, in a case where the method in which stretching is performed between a plurality of rolls, while the rolls are heated is used, a method in which multi-stage stretching is performed between the plurality of rolls is preferably used. By using the method in which multi-stage stretching is performed between the plurality of rolls, even when the stretching is performed at a high ratio, orientation in the MD direction can be inhibited from being increased, and springback and curling after forming can be inhibited. In a case where the multi-stage stretching is performed, the number of the rolls is preferably two or more and more preferably three or more.

In the stretching process, a relaxing step (hereinafter, also referred to as MD relaxation) in the MD direction is preferably performed before the TD direction stretching process following the MD direction stretching process.

The lower limit of the MD relaxation rate is preferably 1%, more preferably 3%, and particularly preferably 5%. When the MD relaxation rate is 1% or more, amorphous components in the film may be relaxed, and the stretching stress can be lowered in the succeeding TD direction stretching process, so that the orientation of the film can be inhibited from being excessively high, and springback and curling after forming can thus be inhibited.

The upper limit of the MD relaxation rate is preferably 10%, more preferably 8%, and particularly preferably 6%. When the MD relaxation rate is 10% or less, wrinkling due to shrinkage can be inhibited, and the quality of the film can be enhanced, and furthermore, a mechanical strength can be inhibited from being reduced due to orientation relaxation.

Examples of the MD relaxation method include, but are not particularly limited to, a method in which the relaxing process is performed, by using difference in speed between rolls, after heating is performed by a hot air heater.

The lower limit of the stretching temperature in the TD direction is preferably 90°C, more preferably 100°C, and particularly preferably 110°C. When the stretching temperature in the TD direction is 90°C or higher, the stretching stress can be lowered, so that springback and curling after forming can be inhibited.

The upper limit of the stretching temperature in the TD direction is preferably 140°C, more preferably 130°C, and particularly preferably 120°C. If the stretching temperature in the TD direction is higher than 140°C, film forming property may be degraded, and, furthermore, orientation of the obtained film in the TD direction may be low, so that formability may be degraded.

The lower limit of the stretching ratio in the TD direction is preferably 2.5 times, more preferably 3.0 times, and particularly preferably 3.5 times. When the stretching ratio in the TD direction is 2.5 times or more, the film has a good mechanical strength and good thickness variation properties, and furthermore, formability is enhanced.

The upper limit of the stretching ratio in the TD direction is preferably 5.0 times, more preferably 4.5 times, and particularly preferably 4.0 times. When the stretching ratio in the TD direction is 5.0 times or less, orientation in the TD direction can be inhibited from being increased, and springback and curling after forming can be inhibited.

As the stretching pattern in the TD direction, not only a generally used linear stretching pattern in which the stretching ratio is linearly increased, but also multi-stage stretching can be preferably used. In the multi-stage stretching, two or more stages are performed in the stretching process with respect to general one-stage stretching, that is, a linear stretching pattern, as in the example illustrated in FIG. 1, and stretching stress applied during the TD direction stretching can be lowered. As a result, even when the stretching ratio is the same, orientation in the TD direction can be inhibited from being excessively high, and springback and curling after forming can be inhibited.

The number of stages in the multi-stage stretching in the TD direction is preferably two or more and five or less. The multi-stage stretching is preferable since each of the stretching temperatures can be changed and the stretching stress can be changed, and the stretching stress during the TD direction stretching can be lowered. When the number of stages in the stretching is two or more, stretching stress can be lowered, and, even when the stretching ratio is the same, orientation in the TD direction can be inhibited from being excessively high, and springback and curling after forming can be inhibited. When the number of stages in the stretching is five or less, the equipment can be prevented from being excessively large. In the multi-stage stretching, a temperature pattern in which the temperature is reduced from the first stage of stretching to the final stage of stretching such that the temperature is made different by 2°C or more per each stage of stretching, is preferable. When the multi-stage stretching is performed, a zone having a fixed length can be provided following each stretching stage as appropriate. When the zone having a fixed length is provided following each stretching stage, stretching stress can be further lowered in the succeeding stretching by relaxing, in the fixed length zone, internal stress generated during the stretching, and, even when the stretching ratio is the same, orientation in the TD direction can be inhibited from being excessively high, and springback and curling after forming can be inhibited.

In the heat-setting process, the lower limit of the heat-setting temperature is preferably 170°C, more preferably 180°C, and particularly preferably 190°C. When the heat-setting temperature is 170°C or higher, the heat shrinkage rate can be reduced. The upper limit of the heat-setting temperature is preferably 230°C, more preferably 220°C, and particularly preferably 210°C. When the heat-setting temperature is 230°C or lower, a mechanical strength can be inhibited from being reduced due to the biaxially oriented polyester film becoming brittle.

In the thermal relaxation process, the lower limit of the relaxation rate in the TD direction is preferably 0.5%, more preferably 1.0%, and particularly preferably 2.0%. When the relaxation rate in the TD direction is 0.5% or more, the heat shrinkage rate in the TD direction can be maintained to be low. The upper limit of the relaxation rate in the TD direction is preferably 10%, more preferably 8%, and particularly preferably 6%. When the relaxation rate in the TD direction is 10% or less, looseness and the like can be prevented and planarity can be enhanced.

## [Configuration and characteristics of base layer]

The lower limit of the thickness of the base layer of the present invention is preferably 5 $\mu$m and more preferably 10 $\mu$m. When the thickness of the base layer is 5 $\mu$m or more, good mechanical characteristics and formability can be obtained. The upper limit of the thickness of the base layer is preferably 100 $\mu$m, more preferably 70 $\mu$m, and particularly preferably 40 $\mu$m.

The lower limit of piercing strength of the base layer of the present invention is preferably 0.45 N/$\mu$m and more preferably 0.50 N/$\mu$m. When the piercing strength is 0.45 N/$\mu$m or more, good formability can be obtained. The upper limit of the piercing strength of the base layer is 0.80 N/$\mu$m. If the piercing strength is more than 0.80 N/$\mu$m, an effect of enhancing formability is saturated. In the present invention, the piercing strength (unit is N/$\mu$m) is a value obtained by dividing, when a needle having a tip radius of 0.5 mm pierces the film at a piercing speed of 50 mm/min, strength (unit is N) obtained when the needle penetrates through the film by the thickness (unit is $\mu$m) of the film.

In the present invention, the lower limit of a heat shrinkage rate of the base layer in each of the MD direction and the TD direction is preferably 0.1%, more preferably 0.2%, and particularly preferably 0.3%. The upper limit of the heat shrinkage rate in each of the MD direction and the TD direction is preferably 2.5%, more preferably 2.0%, and particularly preferably 1.8%. When the heat shrinkage rate of the base layer is 2.5% or less, dimensional change can be inhibited when heating is performed in a secondary process, and wrinkling can be inhibited.

In the present invention, unevenness in thickness of the base layer in the TD direction is preferably 18% or less, more preferably 16% or less, and even more preferably 14% or less. When the unevenness in thickness is 18% or less, winding quality becomes good when the film is formed into a roll.

The haze of the base layer of the present invention is preferably 5.0% or less, more preferably 3.0% or less, and even more preferably 2.5% or less. The haze of 5.0% or less is preferable since printing is clearly presented.

Next, springback during forming will be described.

In a case where molding is performed for battery outer packages, medicine packaging, and the like, the film is pressed into a mold having a predetermined shape, the film is thereafter held for a certain time period in the pressed state, and the mold is thereafter taken up to produce a molded body. If the mold is taken up in a state where the internal stress in the film is not sufficiently relaxed in the holding time period, a force that restores the film to its original shape acts, and springback is increased, so that dimensional accuracy of the molded body may be reduced. The inventors of the present invention have found that the springback can be reduced in a case where the stress attenuation rate of the film having been held for two seconds is within a specific range in a tensile stress relaxation test of the obtained biaxially oriented polyester film.

In the base layer of the present invention, the stress attenuation rate indicated by the following formula (1) is preferably 15% or more and more preferably 16% or more in each of the MD direction and the TD direction in the tensile stress relaxation test at 25°C:

stress attenuation rate (%) after the film is held for two seconds = $100 \times (\sigma 0 - \sigma 1)/\sigma 0$ formula (1), in which $\sigma 0$ represents a value of a tensile stress of the film, which is obtained immediately after a 50% tensile strain is applied to the film by applying a tensile force at a tensile rate of 200 mm/min, and $\sigma 1$ represents a value of a tensile stress obtained when the 50% tensile strain is held for two seconds.

In the base layer of the present invention, when Y(MD) represents a stress (F30 value) at 30% elongation at 25°C in the MD direction of the film, and Y(TD) represents a stress (F30 value) at 30% elongation at 25°C in the TD direction of the film, the following formula (2) and formula (3) are preferably satisfied.

$$125 \, \text{MPa} \leq Y(MD) \leq 155 \, \text{MPa} \qquad \text{formula (2)}$$

$$140 \, \text{MPa} \leq Y(TD) \leq 190 \, \text{MPa} \qquad \text{formula (3)}$$

When the value of Y(MD) is 125 MPa or more, excellent formability can be obtained. Meanwhile, when the value of Y(MD) is 155 MPa or less, stress of the film after forming can be inhibited from being excessively high, springback and resistance after forming can be reduced, and good formability can be obtained. Similarly, when the value of Y(TD) is 140 MPa or more, excellent formability can be obtained. When the value of Y(TD) is 190 MPa or less, stress of the film after forming can be inhibited from being excessively high, springback and resistance after forming can be reduced, and good formability can be obtained.

In the base layer of the present invention, when X(MD) represents a stress (F3 value) at 3% elongation at 25°C in the MD direction of the film, X(TD) represents a stress (F3 value) at 3% elongation at 25°C in the TD direction of the film, Z(MD) represents a value of Y(MD)/X(MD), and Z(TD) represents a value of Y(TD)/X(TD), the following formula (4) and formula (5) are preferably satisfied.

$$1.3 \leq Z(MD) \leq 1.6 \qquad \text{formula (4)}$$

$$1.7 \leq Z(TD) \leq 2.2 \qquad \text{formula (5)}$$

When the value of Z(MD) is 1.3 or more, excellent formability can be obtained. Meanwhile, when the value of Z(MD) is 1.6 or less, stress of the film after forming can be inhibited from being excessively high, springback and resistance after forming can be reduced, and good formability can be obtained. Similarly, when the value of Z(TD) is 11.7 or more, excellent formability can be obtained. When the value of Z(TD) is 2.2 or less, stress of the film after forming can be inhibited from being excessively high, springback and resistance after forming can be reduced, and good formability can be obtained.

The base layer of the present invention preferably has a coefficient $\mu d$ of kinetic friction against a metal surface of 0.10 or more and 0.50 or less from the viewpoint of formability. In a case where the polyester film of the present invention is used for a battery outer package or medicine packaging, the constituent member thereof is molded by male/female-type press molding. When the coefficient μd of kinetic friction between the film and a metal is 0.10 or more and 0.50 or less, slipperiness with respect to a pressing mold becomes good, and molding can thus be smoothly performed. The coefficient μd of kinetic friction is more preferably 0.20 or more and 0.50 or less, and even more preferably 0.25 or more and 0.40 or less. In the present invention, the coefficient of kinetic friction against a metal represents a coefficient of kinetic friction between any surface of the film, and a mirror-finished SUS304-#400 material. The coefficient of kinetic friction can be controlled by a content of a lubricant to be added to the film.

**[Intermediate layer]**

An intermediate layer of the present invention is formed as a biaxially oriented polyamide film. The biaxially oriented polyamide film is preferably formed of a polyamide resin composition including 60% by mass or more of polyamide 6, more preferably including 80% by mass or more of polyamide 6, and even more preferably including 90% by mass or more of polyamide 6. When 60% by mass or more of polyamide 6 is included, an excellent mechanical strength such as an impact strength and excellent gas barrier properties can be obtained.

The polyamide 6 used in the present invention is produced by ring-opening polymerization of ε-caprolactam in general. The polyamide 6 obtained by ring-opening polymerization is dried and then melt-extruded by an extruder after lactam monomers are removed by using hot water in general.

The relative viscosity of the polyamide 6 is preferably 1.8 to 4.5 and more preferably 2.6 to 3.2. If the relative viscosity is less than 1.8, the film may have insufficient impact strength. If the relative viscosity is more than 4.5, a load on the extruder is increased, and it may be difficult to obtain a non-stretched film before stretching. The polyamide 6 used in the present invention may be polyamide 6 that is commercially available from UBE Corporation, BASF, or the like. Particularly, polyamide 6 which is commercially available as polyamide 6 for films, has the above-described relative viscosity, has a residual lactam monomer content of 1% by mass or less, and has blocked or modified terminals and is unlikely to generate lactam monomers during melting, is preferable.

As the polyamide 6, in addition to generally used polyamide 6 obtained by polymerization from monomers derived from fossil fuel, polyamide 6 that is chemically recycled from waste polyamide 6 products such as waste plastic products, waste tire rubber, fibers, and fishing nets can also be used. Examples of a method for obtaining the polyamide 6 chemically recycled from the waste polyamide 6 products include a method in which used polyamide products are collected and the collected products are thereafter depolymerized to obtain ε-caprolactam, and the ε-caprolactam is refined and polymerized to obtain polyamide 6.

In addition, polyamide 6 obtained by mechanically recycling waste materials discharged in the polyamide film producing process can be used in combination. The mechanically recycled polyamide 6 refers to, for example, a raw material obtained in a manner in which off-specification films that are generated during production of biaxially stretched polyamide films and cannot be shipped or waste materials generated as cut end materials (selvage trims) are collected and pelletized through melt-extrusion or compression molding.

The intermediate layer of the present invention may include a thermoplastic resin other than the polyamide 6 as the main component in order to improve stretchability, pinhole resistance, ease of cutting, and the like. Furthermore, the intermediate layer may include a small amount of an additive such as an anti-blocking agent, a lubricating agent, an antistatic agent, a thermal stabilizer, and a light resisting agent.

Examples of the thermoplastic resin other than polyamide 6 as used in the present invention include homopolymers or copolymers of polyamide-based resins, polyester-based resins, polyolefin-based resins, acrylic resins, polycarbonate-based resins, polyvinyl-based resins, and urethane-based resins.

According to one embodiment of the present invention, the biaxially oriented polyamide film may include polyamide MXD6 and/or polyamide 6I in order to enhance stretchability when the film is formed. The content of the polyamides is preferably 20% by mass or less, more preferably 10% by mass or less, and even more preferably 5% by mass or less with respect to a resin composition forming the biaxially oriented polyamide film.

According to one embodiment of the present invention, the biaxially oriented polyamide film may include a polyamide elastomer, a polyester elastomer, a polyolefin elastomer, or the like in order to enhance pinhole resistance.

According to one embodiment of the present invention, the biaxially oriented polyamide film may include inorganic particulates such as silica, kaolin, zeolite, or the like, or crosslinked polymeric particulates of acryl, polystyrene, or the like as an anti-blocking agent or a lubricant. Silica particulates are suitably used from the viewpoint of transparency and slipperiness.

According to one embodiment of the present invention, the biaxially oriented polyamide film may include an organic lubricating agent having an effect of lowering surface energy, as a lubricating agent, to the extent that problems as to adhesiveness and wettability do not arise. Examples of the organic lubricating agent include ethylenebisstearamide (EBS). Using the above-described anti-blocking agent and lubricating agent in combination is favorable because excellent slipperiness and transparency can be preferably imparted to the film simultaneously.

A method for obtaining the biaxially oriented polyamide film of the present invention is not particularly limited and can be selected as appropriate, and may be, for example, a T-die method or an inflation method. A typical production process in which a T-die method is used will be described. The T-die method includes (1) melt-extruding a polyamide resin composition into a sheet-like shape and cooling the obtained sheet on a cooling roll to form an unstretched sheet, (2) a stretching step of stretching the formed unstretched sheet in an MD direction (longitudinal direction ) and a TD direction (width direction) orthogonal to the MD direction, (3) a heat-setting step of heating and crystallizing the film having been subjected to the stretching step, (4) a thermal relaxation step (may also be referred to as relaxing step) of removing residual strain of the film having been subjected to the heat-setting step, and (5) a cooling step of cooling the film after the thermal relaxation step.

The intermediate layer of the present invention may have a monolayer structure formed of one layer or have a multilayer structure formed of two or more layers. The intermediate layer may have two layers, three layers, four layers, or five layers. The resin compositions forming the respective layers may be the same or different from each other.

As one embodiment for obtaining the biaxially oriented polyamide film, a step of performing preliminary stretching of the unstretched sheet in the MD direction at a low ratio, and thereafter performing main stretching in the MD direction at a high ratio, is preferably included.

The above-described MD preliminary stretching is preferably performed in one stage or two stages. The total stretching ratio obtained by multiplying the stretching ratios in the respective stages of MD preliminary stretching is preferably 1.005 times or more and 1.15 times or less. When the preliminary stretching ratio is 1.15 times or less, progress of oriented crystallization can be prevented, and breakage can be inhibited from being caused during the main stretching or TD stretching due to stretching stress becoming excessively high in the succeeding MD main stretching.

The temperature for the MD preliminary stretching is preferably [glass-transition temperature (the unit is °C, hereinafter abbreviated as Tg) of the polyamide resin composition+20]°C or higher and [low-temperature crystallization temperature (the unit is °C, hereinafter abbreviated as Tc) of the polyamide resin composition+20]°C or lower. Tg and Tc are values obtained by measurement in which the method described in Examples is used. By performing the MD preliminary stretching at a temperature of (Tg+20)°C or higher, necking can be prevented, and unevenness in thickness can be reduced. By performing the stretching at a temperature of (Tc+20)°C or lower, progress of thermal crystallization can be prevented, and breakage can be inhibited in the TD stretching process. The stretching temperature is more preferably (Tg+30)°C or higher and (Tc+10)°C or lower. For the MD preliminary stretching, a known longitudinal stretching method such as thermal roll stretching or infrared radiation stretching can be used.

The MD main stretching is preferably performed in two or more stages. The ratio of the first stage of the MD main stretching is preferably 1.1 times or more and 2.9 times or less. If the stretching ratio in the first stage of the main machine direction stretching is excessively low, the stretching effect is not obtained. Meanwhile, when the stretching ratio in the first stage is 2.9 times or less, progress of oriented crystallization can be prevented.

In the MD main stretching, the stretching temperature at the first stage is preferably (Tg+20)°C or higher and (Tc+20)°C or lower. If the stretching temperature is lower than (Tg+20)°C, stretching stress becomes high, and breakage is likely to occur in the TD stretching. If the stretching temperature is higher than (Tc+20)°C, unevenness in thickness may be increased. The stretching temperature is more preferably (Tg+25)°C or higher and (Tc+10)°C or lower. In first stage of the MD main stretching, a known MD stretching method such as thermal roll stretching or infrared radiation stretching can be used.

The ratios in the second and the succeeding stages of the MD main stretching are set such that the total stretching ratio obtained by multiplying the stretching ratios including the MD preliminary stretching ratios is preferably 2.8 times or more and 5.0 times or less, more preferably 3.0 times or more and 3.8 times or less, and even more preferably 3.0 times or more and 3.6 times or less. If the total stretching ratio is less than 2.8 times, although variation in physical properties of the biaxially oriented film in the width direction is reduced, strength in the longitudinal direction may be reduced. If the total machine direction stretching ratio is excessively large, an effect of reducing variation in physical properties of the biaxially oriented film in the width direction may not be exhibited.

The stretching temperature at the second stage in the MD main stretching is preferably (Tg+20)°C or higher and (Tc+20)°C or lower and more preferably (Tg+25)°C or higher and (Tc+10)°C or lower. If the stretching temperature is lower than (Tg+20)°C, stretching stress becomes high, and breakage is likely to occur in the TD stretching. If the stretching temperature is higher than (Tc+20)°C, unevenness in thickness may be increased.

A thermal roll stretching method is preferably used at the second stage of the MD main stretching. As the thermal roll, a ceramic roll having a surface roughness Ra of 0.2 μm or less is preferably used. If a roll having the Ra of more than 0.2 μm is used, stretching may be performed in a state where the film slides on the roll, and abrasion may disadvantageously occur on the film surface. In addition, the stretching start points on the roll may become non-uniform in the width direction, or the stretching start point may vary, so that the thickness may become uneven. At the second stage in the MD main stretching, regardless of the thickness profile, in the width direction, of the film having been subjected to the first stage of the MD main stretching, the film is preferably stretched on the roll in a state of being linearly in close contact therewith in the width direction, and heated and stretched uniformly in the width direction. In the description herein, Ra represents a center line average roughness and represents an average projecting and recessed height (unit=μm), and is a value defined by JIS B 0601.

In the stretching process, a relaxing step (hereinafter, also referred to as MD relaxation) in the MD direction is preferably performed before the TD direction stretching process following the MD direction stretching process. The lower limit of the MD relaxation rate is preferably 1%, more preferably 3%, and particularly preferably 5%. When the MD relaxation rate is 1% or more, amorphous components in the film may be relaxed, and the stretching stress can be lowered in the succeeding TD direction stretching process, so that the orientation of the film can be inhibited from being excessively high, and springback and curling after forming can be inhibited. The upper limit of the MD relaxation rate is preferably 10%, more preferably 8%, and particularly preferably 6%. When the MD relaxation rate is 10% or less, wrinkling due to shrinkage can be inhibited, and the quality of the film can be enhanced, and furthermore, a mechanical strength can be inhibited from being reduced due to orientation relaxation. Examples of the MD relaxation method include, but are not particularly limited to, a method in which the relaxing process is performed, by using difference in speed between rolls, after heating is performed by a hot air heater.

The lower limit of the stretching temperature in the TD direction is preferably 90°C, more preferably 100°C, and particularly preferably 110°C. When the stretching temperature in the TD direction is 90°C or higher, stretching stress can be lowered, and springback and curling after forming can thus be inhibited. The upper limit of the stretching temperature in the TD direction is preferably 140°C, more preferably 130°C, and particularly preferably 120°C. If the stretching temperature in the TD direction is higher than 140°C, film forming property may be degraded, and, furthermore, orientation of the obtained film in the TD direction may be low, so that formability may be degraded.

The lower limit of the stretching ratio in the TD direction is preferably 2.5 times, more preferably 3.0 times, and particularly preferably 3.5 times. When the stretching ratio in the TD direction is 2.5 times or more, the film has a good mechanical strength and good thickness variation properties, and furthermore, formability is enhanced. The upper limit of the stretching ratio in the TD direction is preferably 5.0 times, more preferably 4.5 times, and particularly preferably 4.0 times. When the stretching ratio in the TD direction is 5.0 times or less, orientation in the TD direction can be inhibited from being enhanced, and springback and curling after forming can be inhibited.

As the stretching pattern in the TD direction, not only a generally used linear stretching pattern in which the stretching ratio is linearly increased, but also multi-stage stretching can be preferably used. In the multi-stage stretching, two or more stages are performed in the stretching process with respect to general one-stage stretching, that is, a linear stretching pattern, as in the example illustrated in FIG. 1, and stretching stress applied during the TD direction stretching can be lowered. As a result, even when the stretching ratio is the same, orientation in the TD direction can be inhibited from being excessively high, and springback and curling after forming can be inhibited.

The number of stages in the multi-stage stretching in the TD direction is preferably two or more and five or less. The multi-stage stretching is preferable since each of the stretching temperatures can be changed and the stretching stress can be changed, and the stretching stress during the TD direction stretching can be lowered. When the number of stages in the stretching is two or more, stretching stress can be lowered, and, even when the stretching ratio is the same, orientation in the TD direction can be inhibited from being excessively high, and springback and curling after forming can be inhibited. When the number of stages in the stretching is five or less, the equipment can be prevented from being excessively large. In the multi-stage stretching, a temperature pattern in which the temperature is reduced from the first stage of stretching to the final stage of stretching such that the temperature is made different by 2°C or more per each stage of stretching, is preferable. In a case where the multi-stage stretching is performed, a zone having a fixed length can be provided following each stretching stage as appropriate. In a case where the zone having a fixed length is provided following each stretching stage, stretching stress can be further lowered in the succeeding stretching by relaxing, in the fixed length zone, internal stress generated during the stretching, and, even when the stretching ratio is the same, orientation in the TD direction can be inhibited from being excessively high, and springback and curling after forming can be inhibited.

In the heat-setting process, the lower limit of the heat-setting temperature is preferably 170°C, more preferably 180°C, and particularly preferably 190°C. When the heat-setting temperature is 170°C or higher, the heat shrinkage rate can be reduced. The upper limit of the heat-setting temperature is preferably 230°C, more preferably 220°C, and particularly preferably 210°C. When the heat-setting temperature is 230°C or lower, a mechanical strength can be inhibited from being reduced due to the biaxially oriented polyamide film becoming brittle.

In the thermal relaxation process, the lower limit of the relaxation rate in the TD direction is preferably 0.5%, more preferably 1.0%, and particularly preferably 2.0%. When the relaxation rate in the TD direction is 0.5% or more, the heat shrinkage rate in the TD direction can be maintained to be low. The upper limit of the relaxation rate in the TD direction is preferably 10%, more preferably 8%, and particularly preferably 6%. When the relaxation rate in the TD direction is 10% or less, looseness and the like can be prevented and planarity can be enhanced.

The biaxially oriented polyamide film can also be subjected to corona treatment, coating treatment, flame treatment, or the like in order to further enhance adhesiveness and wettability. The above-described treatment can also be performed while the biaxially oriented polyamide film is being produced. The treatment may be performed by winding off a mill roll or slit roll.

**[Configuration and characteristics of intermediate layer]**

The lower limit of the thickness of the intermediate layer of the present invention is preferably 5 $\mu$m and more preferably 10 $\mu$m. When the thickness of the intermediate layer is 5 $\mu$m or more, good mechanical characteristics and formability can be obtained. The upper limit of the thickness of the intermediate layer is preferably 100 $\mu$m, more preferably 70 $\mu$m, and particularly preferably 40 $\mu$m.

The lower limit of piercing strength of the intermediate layer of the present invention is preferably 0.5 N/$\mu$m and more preferably 0.6 N/$\mu$m. When the piercing strength is 0.5 N/$\mu$m or more, good formability can be obtained. The upper limit of the piercing strength of the intermediate layer is, but is not particularly limited to, preferably 1.0 N/$\mu$m or less. If the piercing strength is more than 1.0 N/$\mu$m, an effect of enhancing formability may be saturated. In the present invention, the piercing strength (unit is N/$\mu$m) is a value obtained by dividing, when a needle having a tip radius of 0.5 mm pierces the film at a piercing speed of 50 mm/min, strength (unit is N) obtained when the needle penetrates through the film by the thickness (unit is $\mu$m) of the film.

In the biaxially oriented polyamide film of the present invention, the lower limit of a heat shrinkage rate in each of the MD direction and the TD direction is preferably 0.5%, more preferably 0.8%, and particularly preferably 1.0%. The upper limit of the heat shrinkage rate in each of the MD direction and the TD direction is preferably 3.0%, more preferably 2.5%, and particularly preferably 2.0%. When the heat shrinkage rate is 3.0% or less, dimensional change can be inhibited when heating is performed in a secondary process, and wrinkling can be inhibited.

In the intermediate layer of the present invention, the stress attenuation rate indicated by the following formula (1) is preferably 12% or more and more preferably 14% or more in each of the MD direction and the TD direction in the tensile stress relaxation test at 25°C:

$$\text{stress attenuation rate (\%) after the film is held for two seconds} = 100 \times (\sigma0 - \sigma1)/\sigma0 \qquad \text{formula (1)},$$

in which $\sigma0$ represents a value of a tensile stress of the film, which is obtained immediately after a 50% tensile strain is applied to the film by applying a tensile force at a tensile rate of 200 mm/min, and $\sigma1$ represents a value of a tensile stress obtained when the 50% tensile strain is held for two seconds.

In the biaxially oriented polyamide film of the present invention, when Y(MD) represents a stress (F30 value) at 30% elongation at 25°C in the MD direction of the film, and Y(TD) represents a stress (F30 value) at 30% elongation at 25°C in the TD direction of the film, the following formula (2) and formula (3) are preferably satisfied.

$$100\,\text{MPa} \leq Y(MD) \leq 150\,\text{MPa} \qquad \text{formula (2)}$$

$$110\,\text{MPa} \leq Y(TD) \leq 200\,\text{MPa} \qquad \text{formula (3)}$$

When the value of Y(MD) is 100 MPa or more, excellent formability can be obtained. Meanwhile, when the value of Y(MD) is 150 MPa or less, stress of the film after forming can be inhibited from being excessively high, springback and resistance after forming can be reduced, and good formability can be obtained. Similarly, when the value of Y(TD) is 110 MPa or more, excellent formability can be obtained. When the value of Y(TD) is 200 MPa or less, stress of the film after forming can be inhibited from being excessively high, springback and resistance after forming can be reduced, and good formability can be obtained.

In the biaxially oriented polyamide film of the present invention, when X(MD) represents a stress (F3 value) at 3% elongation at 25°C in the MD direction of the film, X(TD) represents a stress (F3 value) at 3% elongation at 25°C in the TD direction of the film, Z(MD) represents a value of Y(MD)/X(MD), and Z(TD) represents a value of Y(TD)/X(TD), the following formula (4) and formula (5) are preferably satisfied.

$$1.4 \leq Z(MD) \leq 2.2 \qquad \text{formula (4)}$$

$$2.5 \leq Z(TD) \leq 3.5 \qquad \text{formula (5)}$$

When the value of Z(MD) is 1.4 or more, excellent formability can be obtained. Meanwhile, when the value of Z(MD) is 2.2 or less, stress of the film after forming can be inhibited from being excessively high, springback and resistance after forming can be reduced, and good formability can be obtained. Similarly, when the value of Z(TD) is 12.5 or more, excellent formability can be obtained. When the value of Z(TD) is 3.5 or less, stress of the film after forming can be inhibited from being excessively high, springback and resistance after forming can be reduced, and good formability can be obtained.

**[Metal foil]**

As the metal foil, various metal foils such as aluminum foil and stainless steel foil can be used, and aluminum foil is preferable from the viewpoint of moisture resistance, processability such as extendability, and cost. As aluminum foil, standard soft aluminum foils can be used. Among them, aluminum foil containing iron is preferable from the viewpoint of excellent pinhole resistance and excellent extendability during molding. A content of iron in aluminum foil (100% by mass) containing iron is preferably 0.1 to 9.0% by mass and more preferably 0.5 to 2.0% by mass. When the content of the iron is the lower limit value or more, pinhole resistance and extendability are excellent. When the content of the iron is 9.0% by mass or less, flexibility is excellent. The thickness of the metal foil is preferably 9 to 200 $\mu$m and more preferably 15 to 100 $\mu$m from the viewpoint of barrier properties, pinhole resistance, and processability.

**[Sealant layer]**

Examples of the sealant layer include a resin film formed of a polyolefin-based resin, or an acid-modified polyolefin-based resin obtained by graft-modifying polyolefin-based resin with acid such as maleic anhydride. Examples of the polyolefin-based resin include low-density, medium-density, and high-density polyethylenes; ethylene-a olefin copolymers; homo-, block- or random-polypropylenes; and propylene-$\alpha$ olefin copolymers. One of these polyolefin-based resins may be used alone, or two or more of them may be used in combination.

The sealant layer may be a monolayer film or a multilayer film, and may be selected according to the required function. For example, a multilayer film that includes therein resin such as an ethylene-cyclic olefin copolymer or polymethylpentene can be used in order to impart moisture resistance. In the sealant layer, various additives such as a flame retardant, a slipping agent, an anti-blocking agent, an antioxidant, a light stabilizer, and a tackifier may be blended. The thickness of the sealant layer is preferably 10 to 100 $\mu$m and more preferably 20 to 60 $\mu$m.

**[Laminate]**

In the laminate of the present invention, the base layer, the intermediate layer, the metal foil, and the sealant layer are preferably stacked in this order. The laminate may have a structure in which an adhesive layer, a printed layer, or the like is disposed between the base layer and the intermediate layer, between the intermediate layer and the metal foil, and/or between the metal foil and the sealant layer.

The laminate of the present invention is suitably used for cold forming. The present invention further provides a battery outer package material in which the laminate is used. Particularly, the present invention provides a battery outer package material for a laminate-type lithium ion battery. According to another embodiment, the present invention provides a material for medicine packaging.

EXAMPLES

The film and the laminate were evaluated by the following measurement methods. Unless otherwise specified, the measurement was performed in a measurement room in an environment of 23°C and a relative humidity of 65%.

**[Thickness of film]**

The thickness was measured by using a dial gauge in accordance with the A method of JIS K7130-1999.

**[Unevenness in thickness]**

A sample having a size of 800 mm in the TD direction and 40 mm in the longitudinal direction was taken from a film roll, and a thickness was continuously measured at 5 m/second in the width direction by using a film tester continuous thickness measuring device (manufactured by Fujiwork Co., Ltd.). Tmax. was defined as the maximum thickness, Tmin. was defined as the minimum thickness, and Tave. was defined as an average thickness in the measurement, and unevenness in the thickness of the film in the TD direction was calculated according to the following formula (6).

$$\text{unevenness in thickness} = \{(\text{Tmax.} - \text{Tmin.})/\text{Tave.}\} \times 100(\%) \qquad \text{formula (6)}$$

**[Haze]**

For a sample, the haze was measured at three different positions by using a haze meter (NDH2000 manufactured by NIPPON DENSHOKU INDUSTRIES CO., LTD.) by a method based on JIS-K-7105, and the average value thereof was defined as the haze. The unit was [%].

**[Heat shrinkage rate]**

The heat shrinkage rate of the biaxially oriented polyester film was measured by a dimensional change testing method based on JIS-C-2318 except that the test temperature was 150°C and the heating time was 15 minutes. A sample was cut out in each of the MD direction and the TD direction, and the measurement was performed.

The heat shrinkage rate of the biaxially oriented polyamide film was measured by a dimensional change testing method based on JIS-C-2318 except that the test temperature was 160°C and the heating time was 10 minutes. A sample was cut out in each of the MD direction and the TD direction, and the measurement was performed.

**[Piercing strength]**

The piercing strength was measured in accordance with "2. Testing methods for strength, etc." in "Standards for Food and Additives, etc. Chapter III: Apparatus, Containers and Packaging" (Notification No. 20 of the Ministry of Health and Welfare, 1982) in the Food Sanitation Act. A needle having a tip radius of 0.5 mm was caused to pierce the film at a piercing speed of 50 mm/min, and a value obtained by dividing the strength (N) obtained when the needle penetrated through the film by the thickness ($\mu$m) of the film was set as the piercing strength. The measurement was performed at a normal temperature (23°C). The unit was [N/pm].

[Strength and elongation of biaxially oriented film]

A test sample was cut out in the film MD direction so as to have a width of 15 mm and a length of 100 mm in accordance with JIS K 7127. A tensile test for the test sample was performed by using a tensile tester (AUTOGRAPH AG-I manufactured by SHIMADZU CORPORATION) under conditions that a gauge length was 50 mm and a tensile rate was 200 mm/min. A stress value (F3) at 3% deformation of the test sample and a stress value (F30 value) at 30% deformation of the test sample were calculated according to the obtained stress-strain curve.

[Stress attenuation rate of biaxially oriented film]

A test sample was cut out in the film MD direction so as to have a width of 15 mm and a length of 100 mm. A 50% tensile strain was applied by using a tensile tester

(AUTOGRAPH AG-I manufactured by SHIMADZU CORPORATION) under conditions that a gauge length was 50 mm and a tensile rate was 200 mm/min, and the tensile strain was held from a time when the 50% tensile strain was applied until elapse of 100 seconds, and the change in the stress during the period was recorded.

The stress values from a time immediately after the 50% strain was applied until elapse of two seconds in a state where the strain was held were read from the obtained holding time-stress graph, and the stress attenuation rate after the strain was held for two seconds was obtained according to the following formula (1).

stress attenuation rate (%) after the strain was held for two seconds = $100 \times (\sigma0-\sigma1)/\sigma0$         formula (1)

In the formula, $\sigma0$ represents a tensile stress of the film, which was obtained immediately after the 50% tensile strain was applied to the film by applying a tensile force at the tensile rate of 200 mm/min, and $\sigma1$ represents a stress value obtained when the 50% tensile strain was held for two seconds from $\sigma0$.

**[Cold formability]**

The laminate was set at a die set mold (90 mm×50 mm projection shape), and draw-forming was performed by applying pressure to the laminate at 23°C with use of a pressing machine. The draw depth at the forming was increased in units of 0.2 mm, and the maximum depth at which breakage of the laminate was not caused was set as the draw depth. The evaluation was made according to the following criteria:

A: The draw depth was 8 mm or more,
B: The draw depth was 6 mm or more and less than 8 mm,
C: The draw depth was 4 mm or more and less than 6 mm,
D: The draw depth was less than 4 mm.

[Springback after forming]

The laminate was set at a die set mold (90 mm×50 mm projection shape), and draw-forming was performed by applying pressure to the laminate at 23°C with use of a pressing machine. In the draw-forming, the rate at which the laminate was pressed into the mold was 200 mm/min, and the holding time after the pressing was two seconds. The depth of the container was measured after the mold was removed, and the retention rate (ratio between the depth of the container and the forming depth) was calculated. The evaluation was made according to the following criteria:

A: The retention rate was 90% or more,
B: The retention rate was 80% or more and less than 90%,
C: The retention rate was 70% or more and less than 80%,
D: The retention rate was less than 70%.

[Curling after forming]

A sample which was able to be formed without being broken in the cold formability evaluation was placed on a level table such that the projection of the sample was on the upper side. The average value of heights by which four corners of the formed test piece were raised from the table serving as an originating point was set as the warp height average value, and the evaluation was made according to the following criteria:

A: The warp height average value was less than 3 mm,
B: The warp height average value was 3 mm or more and less than 5 mm,
C: The warp height average value was 5 mm or more and less than 10 mm,
D: The warp height average value was 10 mm or more.

**[Production of biaxially oriented polyester film]**

(Polyester resin A)

A fossil-fuel-derived PET resin formed of terephthalic acid//ethylene glycol = 100//100 (% by mole) (intrinsic viscosity of 0.62 dl/g), was used.

(Polyester resin B)

A fossil-fuel-derived PET resin in which terephthalic acid//ethylene glycol = 100//100 (% by mole) were included, and a content of porous silica particles was 0.72 % by mass (intrinsic viscosity of 0.62 dl/g), was used.

**[PET-1]**

In an extruder, 87 parts by mass of the polyester resin A and 13 parts by mass of the polyester resin B were put and mixed. The resins were melted at 280°C by the extruder, thereafter cast from a T-die, and were brought into close contact with a cooling roll set at 10°C by an electrostatic adhesion method, to obtain an unstretched sheet. Subsequently, the obtained unstretched film was preheated by a roll heated to a temperature of 80°C, thereafter heated to 120°C by an infrared heater, and was subjected to one-stage stretching at the stretching ratio of 3.7 times in the MD direction.

Subsequently, the film was stretched at a stretching ratio of 4.6 times in the TD direction by a tenter-type transverse stretching machine at a preheating temperature of 120°C and a stretching temperature of 140°C. Thereafter, the film was heat-set at 210°C and subjected to 5% relaxation in the TD direction, and one surface of the film was subjected to corona treatment, to produce a biaxially oriented polyester film having a thickness of 12 $\mu$m. Table 1 indicates evaluation results.

**[PET-2, PET-3]**

Films were formed in the same manner as for PET-1 except that the stretching ratios in the MD direction were changed to the ratios indicated in Table 1, to produce biaxially oriented polyester films each having a thickness of 12 $\mu$m. Table 1 indicates evaluation results.

**[PET-4]**

The stretching process in the MD direction was performed by three-stage roll stretching. The film was formed in the same manner as for PET-1 except that a roll was heated to a roll heating temperature of 115°C, and the MD direction stretching was performed at the total stretching ratio of 4.5 times by performing 1.24 times stretching at the first stage, performing 1.4 times stretching at the second stage, and performing 2.6 times stretching at the third stage, to produce a biaxially oriented polyester film having a thickness of 12 μm. Table 1 indicates evaluation results.

**[PET-5]**

In an extruder, the polyester resin A and the polyester resin B were put at the ratio indicated in Table 1. The resins were melted at 280°C by the extruder, thereafter cast from a T-die, and were brought into close contact with a cooling roll set at 10°C by an electrostatic adhesion method, to obtain an unstretched sheet. Subsequently, the obtained unstretched film was preheated by a roll having been heated to a temperature of 80°C, thereafter heated to 120°C by an infrared heater, and was subjected to one-stage stretching at the stretching ratio of 5.0 times in the MD direction.
Immediately after the film was subjected to the MD stretching, the film was caused to pass through a heating oven set to 95°C by a hot air heater, and was subjected to 3% relaxation in the MD direction by using difference in speed between a roll at an inlet of the heating oven and a roll at an outlet thereof.
Subsequently, the stretching method at the tenter-type transverse stretching machine was changed to three-stage stretching, and a 1 m fixed length region was provided between the first stage and the second stage, and between the second stage and the third stage, and the stretching was performed. The stretching temperatures and the stretching ratios at the respective stages were as indicated in Table 1. Thereafter, the film was heat-set at 210°C and subjected to 5% thermal relaxation in the width direction, and one surface of the film was subjected to corona treatment, to produce a biaxially oriented polyester film having a thickness of 12 μm. Table 1 indicates evaluation results.

**[PET-6 to PET-9]**

Films were formed in the same manner as for PET-1 except that the stretching conditions in the MD direction and the stretching conditions in the TD direction were changed to the conditions indicated in Table 1, to produce biaxially oriented polyester films each having a thickness of 12 μm. Table 1 indicates evaluation results.

[Table 1A]

| | | | Unit | PET-1 | PET-2 | PET-3 | PET-4 | PET-5 |
|---|---|---|---|---|---|---|---|---|
| MD stretching process | Stretching method | | - | 1-stage stretching | 1-stage stretching | 1-stage stretching | 3-stage stretching | 1-stage stretching |
| | Heating method | | - | infrared heater | infrared heater | infrared heater | roll heating | infrared heater |
| | Stretching ratio | 1st-stage | times | 3.7 | 3.0 | 4.0 | 1.24 | 5.0 |
| | | 2nd-stage | times | - | - | - | 1.4 | - |
| | | 3rd-stage | times | - | - | - | 2.6 | - |
| | | Total | times | 3.7 | 3.0 | 4.0 | 4.5 | 5.0 |
| | Stretching temperature | - | °C | 120 | 120 | 120 | 115 | 120 |
| | Relaxation rate | - | % | - | - | - | - | 3 |

(continued)

| | | | Unit | PET-1 | PET-2 | PET-3 | PET-4 | PET-5 |
|---|---|---|---|---|---|---|---|---|
| TD stretching process | Stretching ratio | 1st-stage | times | 4.6 | 4.6 | 4.6 | 4.6 | 1.5 |
| | | 2nd-stage | | | | | | 1.5 |
| | | 3rd-stage | | | | | | 1.6 |
| | Stretching temperature | 1st-stage | times | 140 | 140 | 140 | 140 | 125 |
| | | 2nd-stage | | | | | | 120 |
| | | 3rd-stage | | | | | | 115 |
| | Stretching pattern | - | - | linear | linear | linear | linear | multi-stage |
| | Heat-setting temperature | - | °C | 210 | 210 | 210 | 210 | 210 |
| Thickness | | - | μm | 12 | 12 | 12 | 12 | 12 |
| Thickness variation | | - | % | 14.5 | 15.2 | 13.5 | 13.6 | 14.9 |
| Haze | | - | % | 2.2 | 2.1 | 2.5 | 2.4 | 2.2 |
| Piercing strength | | - | N | 6.0 | 5.6 | 6.5 | 6.6 | 6.4 |
| | | - | N/μm | 0.50 | 0.47 | 0.54 | 0.55 | 0.53 |
| Heat shrinkage rate | MD | % | 1.6 | 1.3 | 1.8 | 1.7 | 1.8 |
| Heat shrinkage rate | TD | % | 0.3 | 0.3 | 0.4 | 0.4 | 0.3 |
| Stress attenuation rate | MD | % | 18.0 | 19.5 | 17.0 | 17.5 | 20.0 |
| | TD | % | 16.1 | 16.2 | 16.5 | 16.3 | 18.0 |
| X:F3 | MD | MPa | 99 | 103 | 95 | 96 | 95 |
| | TD | MPa | 95 | 96 | 96 | 95 | 96 |
| Y:F30 | MD | MPa | 138 | 135 | 141 | 140 | 142 |
| | TD | MPa | 189 | 188 | 189 | 188 | 180 |
| Z:F30/F3 | MD | - | 1.4 | 1.3 | 1.5 | 1.5 | 1.5 |
| | TD | - | 1.9 | 2.0 | 2.0 | 2.0 | 1.9 |

[Table 1B]

| | | | Unit | PET-6 | PET-7 | PET-8 | PET-9 |
|---|---|---|---|---|---|---|---|
| MD stretching process | Stretching method | | - | 1-stage stretching | 1-stage stretching | 1-stage stretching | 1-stage stretching |
| | Heating method | | - | infrared heater | infrared heater | roll heating | roll heating |
| | Stretching ratio | 1st-stage | times | 2.5 | 5.0 | 3.7 | 4.5 |
| | | 2nd-stage | times | - | - | - | - |
| | | 3rd-stage | times | - | - | - | - |
| | | Total | times | 2.5 | 5.0 | 3.7 | 4.5 |
| | Stretching temperature | | °C | 120 | 120 | 115 | 115 |
| | Relaxation rate | | % | - | - | - | - |
| TD stretching process | Stretching ratio | 1st-stage | times | 3.0 | 5.5 | 4.6 | 4.6 |
| | | 2nd-stage | | | | | |
| | | 3rd-stage | | | | | |
| | Stretching temperature | 1st-stage | times | 140 | 140 | 120 | 140 |
| | | 2nd-stage | | | | | |
| | | 3rd-stage | | | | | |
| | Stretching pattern | | - | linear | linear | linear | linear |
| | Heat-setting temperature | | °C | 210 | 210 | 210 | 210 |
| Thickness | | | μm | 12 | 12 | 12 | 12 |
| Thickness variation | | | % | 21.0 | 12.1 | 13.6 | 12.3 |
| Haze | | | % | 2.0 | 2.6 | 2.2 | 2.6 |
| Piercing strength | | | N | 4.9 | 6.9 | 6.2 | 6.8 |
| | | | N/μm | 0.41 | 0.58 | 0.52 | 0.57 |
| Heat shrinkage rate | | MD | % | 1.0 | 3.2 | 1.8 | 2.7 |
| Heat shrinkage rate | | TD | % | 0.1 | 1.5 | 0.6 | 0.4 |
| Stress attenuation rate | | MD | % | 24.0 | 9.0 | 13.0 | 10.0 |
| | | TD | % | 19.0 | 8.5 | 16.0 | 16.2 |
| X:F3 | | MD | MPa | 105 | 85 | 95 | 86 |
| | | TD | MPa | 102 | 90 | 96 | 65 |
| Y:F30 | | MD | MPa | 121 | 161 | 158 | 159 |
| | | TD | MPa | 165 | 215 | 188 | 189 |
| Z:F30/F3 | | MD | - | 1.2 | 1.9 | 1.7 | 1.8 |
| | | TD | - | 1.6 | 2.4 | 2.0 | 2.9 |

**[Production of biaxially oriented polyamide film]**

(Polyamide 6)

A polyamide 6 resin having a relative viscosity of 2.9 and a melting point (Tm) of 220°C was used.

(Polyamide MXD6)

A polyamide MDX6 resin having a relative viscosity of 2.2 and a melting point (Tm) of 238°C was used.

[Master batch containing silica particulates and organic lubricating agent]

A master batch was obtained by blending 93.5% by mass of the above-described polyamide 6, 5% by mass of porous silica particulates (weight average particle diameter = 3.0 $\mu$m, pore volume = 1.8 ml/g), and 1.5% by mass of ethylene bis stearamide (manufactured by Kyoeisha Chemical Co., Ltd., LIGHT AMIDE WE-183), melt-knead-extruding the resultant by a twin-screw extruder, and cutting into a pellet-like form.

**[ONY-1]**

The raw materials were blended so as to contain 85 parts by mass of the polyamide 6, 3 parts by mass of the polyamide MXD6, and 12 parts by mass of the master batch of the silica particulates and the ethylenebisamide. The blended raw materials were extruded as a melted film by an extruder through a T-die at a temperature of 260°C after a water content was adjusted to 0.1% by mass, and the melted film was brought into close contact with a cooling roll set at 30°C by an electrostatic adhesion method, and cooled and solidified, to obtain an unstretched film having a thickness of 200 $\mu$m. The unstretched film had a Tg of 41°C and a Tc of 69°C.
By using a roll stretching machine, the unstretched film was stretched 1.03 times at a stretching temperature of 80°C in the first stage of the MD preliminary stretching, and subsequently stretched 1.03 times at a stretching temperature of 80°C in the second stage of the MD preliminary stretching. Subsequently, the film was stretched 2.1 times at 85°C in the first stage of the MD main stretching, and further stretched 1.53 times at a stretching temperature of 70°C in the second stage of the MD main stretching. The MD stretched film was sequentially guided to a tenter, and stretched 4.0 times at 130°C in the TD direction, and thereafter heat-set at 210°C, and was further subjected to 5.0% relaxation at 210°C in the TD direction. Subsequently, the film was cooled at 100°C, and one surface of the film was subjected to corona treatment, to produce a biaxially oriented polyamide film having a thickness of 15 $\mu$m. Table 2 indicates the evaluation results.

**[ONY-2, ONY-3]**

As indicated in Table 2, biaxially oriented polyamide films were obtained in the same manner as in examples except that the temperatures and the ratios in the MD preliminary stretching and the ratios in the MD main stretching were changed. Table 2 indicates the evaluation results.

**[ONY-4]**

The raw materials were blended so as to contain 85 parts by mass of the polyamide 6, 3 parts by mass of the polyamide MXD6, and 12 parts by mass of the master batch of the silica particulates and the ethylenebisamide. The blended raw materials were extruded as a melted film by an extruder through a T-die at a temperature of 260°C after a water content was adjusted to 0.1% by mass, and the melted film was brought into close contact with a cooling roll set at 30°C by an electrostatic adhesion method, and cooled and solidified, to obtain an unstretched film having a thickness of 200 $\mu$m. The unstretched film had a Tg of 41°C and a Tc of 69°C.
By using a roll stretching machine, the unstretched film was stretched 1.07 times at a stretching temperature of 85°C in the MD preliminary stretching. Subsequently, the film was stretched 2.0 times at 85°C in the first stage of the MD main stretching, and further stretched 2.0 times at a stretching temperature of 70°C in the second stage of the MD main stretching. Immediately after the film was subjected to the MD stretching, the film was caused to pass through a heating oven having been set to 85°C by a hot air heater, and was subjected to 5% relaxation in the MD direction by using difference in speed between a roll at an inlet of the heating oven and a roll at an outlet thereof. The MD stretched film was sequentially guided to a tenter, and stretched 4.0 times at 130°C in the TD direction. The film was heat-set at 210°C, and was further subjected to 5.0% relaxation at 210°C in the TD direction. Subsequently, the film was cooled at 100°C, and one surface of the film was subjected to corona treatment, to produce a biaxially oriented polyamide film having a thickness of 15 $\mu$m. Table 2 indicates the evaluation results.

**[ONY-5]**

The raw materials were blended so as to contain 85% by mass of the polyamide 6, 3% by mass of the polyamide MXD6, and 12% by mass of the master batch of the silica particulates and the ethylenebisamide. The blended raw materials were extruded as a melted film by an extruder through a T-die at a temperature of 260°C after a water content was adjusted to 0.1% by mass, and the melted film was brought into close contact with a cooling roll set at 30°C by an electrostatic adhesion method, and cooled and solidified, to obtain an unstretched film having a thickness of 200 μm. The unstretched film had a Tg of 41°C and a Tc of 69°C.

By using a roll stretching machine, the unstretched film was stretched 1.03 times at a stretching temperature of 80°C in the first stage of the MD preliminary stretching, and subsequently stretched 1.03 times at a stretching temperature of 80°C in the second stage of the MD preliminary stretching. Subsequently, the film was stretched 2.1 times at 85°C in the first stage of the MD main stretching, and further stretched 1.53 times at a temperature of 70°C in the second stage of the MD main stretching. The MD stretched film was sequentially guided to a tenter. As the stretching method at the tenter, three-stage stretching was performed, a 1 m fixed length region was provided between the first stage and the second stage, and between the second stage and the third stage, and the stretching was performed in the TD direction. The film was heat-set at 210°C, was further subjected to 5.0% relaxation at 210°C in the TD direction, and subsequently cooled at 100°C, and one surface of the film was subjected to corona treatment, to produce a biaxially oriented polyamide film having a thickness of 15 μm. Table 2 indicates the evaluation results.

**[ONY-6, ONY-7, ONY-8]**

Biaxially oriented polyamide films were produced in the same manner as for ONY-1 except that MD preliminary stretching was not performed, and the MD main stretching was performed at the temperatures and ratios indicated in Table 2. Table 2 indicates the evaluation results.

**[ONY-9]**

A biaxially oriented polyamide film was produced in the same manner as for ONY-1 except that MD preliminary stretching was not performed, and the MD main stretching was performed merely by one-stage stretching at the temperature and the ratio indicated in Table 2. Table 2 indicates the evaluation results.

[Table 2A]

| | | | Unit | ONY-1 | ONY-2 | ONY-3 | ONY-4 | ONY-5 |
|---|---|---|---|---|---|---|---|---|
| MD stretching process | Preliminary stretching 1st-stage | Temperature | °C | 80 | 85 | 85 | 85 | 80 |
| | | Times | times | 1.03 | 1.03 | 1.07 | 1.07 | 1.03 |
| | Preliminary stretching 2nd-stage | Temperature | °C | 80 | 85 | - | - | 80 |
| | | Times | times | 1.03 | 1.03 | - | - | 1.03 |
| | Main stretching 1st-stage | Temperature | °C | 85 | 85 | 85 | 85 | 85 |
| | | Times | times | 2.10 | 2.10 | 2.00 | 2.00 | 2.10 |
| | Main stretching 2nd-stage | Temperature | °C | 70 | 70 | 70 | 70 | 70 |
| | | Times | times | 1.53 | 1.70 | 1.45 | 2.00 | 1.53 |
| | Relaxation rate | | % | - | - | - | 5.0 | - |
| | Total ratio of longitudinal stretching | | times | 3.4 | 3.8 | 3.1 | 4.0 | 3.4 |

(continued)

| | | | Unit | ONY-1 | ONY-2 | ONY-3 | ONY-4 | ONY-5 |
|---|---|---|---|---|---|---|---|---|
| TD stretching process | 1st-stage | Temperature | °C | 130 | 130 | 130 | 130 | 130 |
| | | Times | | 4.0 | 4.0 | 4.0 | 4.0 | 1.2 |
| | 2nd-stage | Temperature | °C | - | - | - | - | 130 |
| | | Times | | - | - | - | - | 1.3 |
| | 3rd-stage | Temperature | °C | - | - | - | - | 130 |
| | | Times | - | - | - | - | - | 1.5 |
| | Heat-setting temperature | Temperature | °C | 210 | 210 | 210 | 210 | 210 |
| | Relaxation rate | | % | 5.0 | 5.0 | 5.0 | 5.0 | 5.0 |
| Thickness | | | μm | 15 | 15 | 15 | 15 | 15 |
| Piercing strength | | | N/μm | 0.8 | 0.8 | 0.7 | 0.9 | 0.8 |
| Heat shrinkage rate | | MD | % | 1.2 | 1.4 | 1.0 | 1.3 | 1.2 |
| | | TD | % | 1.5 | 1.6 | 1.3 | 1.5 | 1.2 |
| Stress attenuation rate | | MD | % | 18.2 | 14.1 | 20.2 | 14.2 | 18.1 |
| | | TD | % | 13.8 | 13.7 | 13.8 | 13.7 | 15.1 |
| X:F3 | | MD | Mpa | 78 | 76 | 79 | 75 | 78 |
| | | TD | MPa | 59 | 59 | 58 | 58 | 57 |
| Y:F30 | | MD | MPa | 121 | 141 | 113 | 143 | 121 |
| | | TD | MPa | 187 | 187 | 186 | 187 | 188 |
| Z:F30/F3 | | MD | - | 1.5 | 1.9 | 1.4 | 1.9 | 1.5 |
| | | TD | - | 3.2 | 3.2 | 3.2 | 3.2 | 3.3 |

[Table 2B]

| | | | Unit | ONY-6 | ONY-7 | ONY-8 | ONY-9 |
|---|---|---|---|---|---|---|---|
| MD stretching process | Preliminary stretching 1st-stage | Temperature | °C | - | - | - | - |
| | | Times | times | - | - | - | - |
| | Preliminary stretching 2nd-stage | Temperature | °C | - | - | - | - |
| | | Times | times | - | - | - | - |
| | Main stretching 1st-stage | Temperature | °C | 75 | 80 | 80 | 70 |
| | | Times | times | 1.70 | 2.00 | 1.70 | 3.40 |
| | Main stretching 2nd-stage | Temperature | °C | 70 | 70 | 65 | - |
| | | Times | times | 2.00 | 2.00 | 1.53 | - |
| Relaxation rate | | | % | - | - | - | - |
| Total ratio of longitudinal stretching | | | times | 3.4 | 4.0 | 2.6 | 3.4 |

(continued)

| | | | Unit | ONY-6 | ONY-7 | ONY-8 | ONY-9 |
|---|---|---|---|---|---|---|---|
| TD stretching process | 1st-stage | Temperature | °C | 130 | 130 | 130 | 130 |
| | | Times | | 4.0 | 4.0 | 4.0 | 4.0 |
| | 2nd-stage | Temperature | °C | - | - | - | - |
| | | Times | - | - | - | - | - |
| | 3rd-stage | Temperature | °C | - | - | - | - |
| | | Times | - | - | - | - | - |
| | Heat-setting temperature | Temperature | °C | 210 | 210 | 210 | 210 |
| | Relaxation rate | | % | 5.0 | 5.0 | 5.0 | 5.0 |
| Thickness | | | μm | 15 | 15 | 15 | 15 |
| Piercing strength | | | N/μm | 0.8 | 1.0 | 0.5 | 0.8 |
| Heat shrinkage rate | | MD | % | 1.2 | 2.0 | 0.5 | 1.5 |
| | | TD | % | 1.4 | 1.8 | 1.0 | 1.8 |
| Stress attenuation rate | | MD | % | 11.5 | 9.8 | 21.5 | 10.8 |
| | | TD | % | 13.7 | 13.8 | 13.8 | 13.8 |
| X:F3 | | MD | MPa | 76 | 74 | 80 | 75 |
| | | TD | MPa | 58 | 59 | 59 | 59 |
| Y:F30 | | MD | MPa | 129 | 152 | 101 | 132 |
| | | TD | MPa | 188 | 188 | 187 | 188 |
| Z:F30/F3 | | MD | - | 1.7 | 2.1 | 1.3 | 1.7 |
| | | TD | - | 3.2 | 3.2 | 3.2 | 3.2 |

**[Examples 1 to 5, Comparative examples 1 to 9]**

The biaxially oriented polyester films PET-1 to PET-9 and the biaxially oriented polyamide films ONY-1 to ONY-9 as described above were used in combinations indicated in Table 3, and dry-laminated. As an adhesive, an ester-based adhesive obtained by mixing 33.6 parts by mass of a main agent (TM569 manufactured by Toyo-Morton, Ltd.), 4.0 parts by mass of a curing agent (CAT10L manufactured by Toyo-Morton, Ltd.), and 62.4 parts by mass of ethyl acetate was used, and was applied at an application amount of 3.0 g/m². Subsequently, the same ester-based adhesive as described above was applied to a surface of the laminate obtained as described above on the biaxially oriented polyamide film side at an application amount of 3.0 g/m², and aluminum foil (8079 material, thickness of 40 μm) was stacked and dry-laminated on the laminate. Subsequently, the aluminum foil of the laminate of the biaxially oriented polyester film/the biaxially oriented polyamide film/the aluminum foil which was thus obtained, and an unstretched polypropylene sealant film (unstretched polypropylene film P1146 manufactured by TOYOBO Co., Ltd.) having a thickness of 70 μm were dry-laminated by using the same ester-based adhesive as described above. The obtained product was wound and maintained at 40°C, to perform aging for three days, and thereafter, the laminate was evaluated. Table 3 indicates the evaluation results.

[Table 3]

| | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|
| Biaxially oriented polyester film | PET-1 | PET-2 | PET-3 | PET-4 | PET-5 | PET-1 | PET-1 | PET-1 | PET-1 | PET-6 | PET-7 | PET-8 | PET-9 | PET-6 |
| Biaxially oriented polyamide film | ONY-1 | ONY-2 | ONY-3 | ONY-4 | ONY-5 | ONY-6 | ONY-7 | ONY-8 | ONY-9 | ONY-1 | ONY-1 | ONY-1 | ONY-1 | ONY-6 |
| Cold formability | B | A | B | A | B | B | A | C | B | D | A | B | B | B |
| Springback after forming | B | B | A | B | B | C | D | B | C | A | D | D | D | C |
| Curling after forming | B | B | A | B | B | C | D | B | C | A | D | D | D | C |

As indicated in Table 3, the laminates of the examples had excellent formability, and reduction of dimensional accuracy due to springback after forming was inhibited and warp resistance was excellent, and therefore, dimensional accuracy in forming was excellent. On the other hand, in the laminates of the comparative examples, cold formability, and inhibition of springback and curling after forming were insufficient.

**Claims**

1. A laminate comprising:

   a base layer;
   an intermediate layer;
   metal foil; and
   a sealant layer, wherein
   the base layer is a biaxially oriented polyester film satisfying the following (a) to (c), and
   the intermediate layer is a biaxially oriented polyamide film satisfying the following (d) to (f),

   (a) a piercing strength is 0.45 N/$\mu$m or more and 0.80 N/$\mu$m or less,
   (b) a heat shrinkage rate at 150°C is 2.5% or less in each of an MD direction and a TD direction,
   (c) a stress attenuation rate indicated by the following formula (1) is 15.0% or more in each of the MD direction and the TD direction in a tensile stress relaxation test at 25°C:

$$\text{stress attenuation rate } (\%) = 100 \times (\sigma0\text{-}\sigma1)/\sigma0 \qquad \text{formula (1)},$$

   wherein $\sigma0$ represents a value of a tensile stress obtained immediately after a 50% tensile strain is applied to the film by applying a tensile force at a tensile rate of 200 mm/min, and $\sigma1$ represents a value of a tensile stress obtained when the 50% tensile strain is held for two seconds,
   (d) a piercing strength measured in accordance with JIS Z 7102 is 0.5 N/$\mu$m or more and 1.0 N/$\mu$m or less,
   (e) a heat shrinkage rate at 160°C is 3.0% or less in each of the MD direction and the TD direction, and
   (f) a stress attenuation rate indicated by the above formula (1) is 12.0% or more in each of the MD direction and the TD direction in the tensile stress relaxation test at 25°C.

2. The laminate according to claim 1, wherein

   the base layer further satisfies the following (g),
   (g) the base layer satisfies the following formulas (2) to (5):

$$125 \text{ MPa} \leq Y(MD) \leq 155 \text{ MPa} \qquad \text{formula (2)};$$

$$140 \text{ MPa} \leq Y(TD) \leq 190 \text{ Mpa} \qquad \text{formula (3)}:$$

$$1.3 \leq Z(MD) \leq 1.6 \qquad \text{formula (4)};$$

$$1.7 \leq Z(TD) \leq 2.2 \qquad \text{formula (5)},$$

   wherein Y(MD) and Y(TD) represent stresses at 30% elongation at 25°C in the MD direction and the TD direction, respectively, of the film, X(MD) and X(TD) represent stresses at 3% elongation at 25°C in the MD direction and the TD direction, respectively, of the film, and Z(MD) and Z(TD) represent values of Y(MD)/X(MD) and Y(MD)/X(MD), respectively.

3. The laminate according to claim 1 or 2, wherein

   the following (h) is further satisfied,
   (h) the laminate satisfies the following formulas (6) to (9):

$$100 \text{ MPa} \le Y(MD) \le 150 \text{ MPa} \qquad \text{formula (6);}$$

$$110 \text{ Mpa} \le Y(TD) \le 200 \text{ Mpa} \qquad \text{formula (7);}$$

$$1.4 \le Z(MD) \le 2.2 \qquad \text{formula (8);}$$

$$2.5 \le Z(TD) \le 3.5 \qquad \text{formula (9),}$$

wherein $Y(MD)$ and $Y(TD)$ represent stresses at 30% elongation at 25°C in the MD direction and the TD direction, respectively, of the film, $X(MD)$ and $X(TD)$ represent stresses at 3% elongation at 25°C in the MD direction and the TD direction, respectively, of the film, and $Z(MD)$ and $Z(TD)$ represent values of $Y(MD)/X(MD)$ and $Y(MD)/X(MD)$, respectively, the above formulas (6) to (9) are all satisfied.

4. The laminate according to any one of claims 1 to 3, further comprising a printed layer.

5. A battery outer package material comprising the laminate according to any one of claims 1 to 4.

[FIG.1]

| preheating zone | 1st-stretching zone | | 2nd-stretching zone | heat-setting zone |

## INTERNATIONAL SEARCH REPORT

International application No.

**PCT/JP2023/004181**

**A. CLASSIFICATION OF SUBJECT MATTER**

*B29C 55/12*(2006.01)i; *B65D 65/40*(2006.01)i; *C08J 5/18*(2006.01)i; *B32B 15/085*(2006.01)i; *B32B 15/088*(2006.01)i; *B32B 15/09*(2006.01)i

FI: B32B15/09 A; B29C55/12; B32B15/085 A; B32B15/088; B65D65/40 D; C08J5/18 CFG

According to International Patent Classification (IPC) or to both national classification and IPC

**B. FIELDS SEARCHED**

Minimum documentation searched (classification system followed by classification symbols)

B32B1/00-43/00; B29C55/00-55/30; B29C61/00-61/10; B65D65/00-65/46; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-107585 A (IDEMITSU UNITECH CO LTD) 11 June 2015 (2015-06-11) claims 1, 7, paragraphs [0035]-[0036], [0041], [0057]-[0062], [0068], table 1, examples 1-3 | 1-3, 5 |
| Y | | 4 |
| Y | JP 2014-197553 A (DAINIPPON PRINTING CO LTD) 16 October 2014 (2014-10-16) claims 1-2, paragraph [0002] | 4 |
| A | JP 2008-044209 A (IDEMITSU UNITECH CO LTD) 28 February 2008 (2008-02-28) claim 1, paragraph [0031], examples | 1-5 |
| A | JP 2015-107586 A (IDEMITSU UNITECH CO LTD) 11 June 2015 (2015-06-11) claims 1, 6-9, examples | 1-5 |
| A | JP 2021-190419 A (SHOWA DENKO PACKAGING CO LTD) 13 December 2021 (2021-12-13) claims 1-2, paragraphs [0018], [0020], examples | 1-5 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **27 March 2023** | **04 April 2023** |

| Name and mailing address of the ISA/JP <br><br> **Japan Patent Office (ISA/JP)** <br> **3-4-3 Kasumigaseki, Chiyoda-ku, Tokyo 100-8915** <br> **Japan** | Authorized officer <br><br><br><br> Telephone No. |

Form PCT/ISA/210 (second sheet) (January 2015)

**EP 4 494 845 A1**

**INTERNATIONAL SEARCH REPORT**

International application No.

**PCT/JP2023/004181**

**C. DOCUMENTS CONSIDERED TO BE RELEVANT**

| Category* | Citation of document, with indication, where appropriate, of the relevant passages | Relevant to claim No. |
|---|---|---|
| A | JP 2017-222087 A (UNITIKA LTD) 21 December 2017 (2017-12-21)<br>claim 1, paragraph [0009], examples | 1-5 |
| A | JP 2019-155845 A (TOYOBO CO., LTD.) 19 September 2019 (2019-09-19)<br>claim 1, examples | 1-5 |
| A | JP 2021-038406 A (TOYOBO CO., LTD.) 11 March 2021 (2021-03-11)<br>claim 1, examples | 1-5 |

Form PCT/ISA/210 (second sheet) (January 2015)

**INTERNATIONAL SEARCH REPORT**
Information on patent family members

International application No.

**PCT/JP2023/004181**

| Patent document cited in search report | | | Publication date (day/month/year) | Patent family member(s) | Publication date (day/month/year) |
|---|---|---|---|---|---|
| JP | 2015-107585 | A | 11 June 2015 | (Family: none) | |
| JP | 2014-197553 | A | 16 October 2014 | (Family: none) | |
| JP | 2008-044209 | A | 28 February 2008 | US 2010/0249340 A1 claim 1, paragraph [0105], examples | |
| JP | 2015-107586 | A | 11 June 2015 | (Family: none) | |
| JP | 2021-190419 | A | 13 December 2021 | US 2021/0376417 A1 claims 1-2, paragraphs [0055]-[0058], examples | |
| JP | 2017-222087 | A | 21 December 2017 | (Family: none) | |
| JP | 2019-155845 | A | 19 September 2019 | (Family: none) | |
| JP | 2021-038406 | A | 11 March 2021 | US 2021/0395519 A1 claim 1, examples | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008053133 A

- WO 2015125806 A

**Non-patent literature cited in the description**

- 2. Testing methods for strength, etc. *Standards for Food and Additives, etc. Chapter III: Apparatus, Containers and Packaging*, 1982 (20)